(19) Europäisches Patentamt
European Patent Office
Office européen des brevets

(11) **EP 3 910 428 A1**

(12) **EUROPEAN PATENT APPLICATION**

(43) Date of publication:
**17.11.2021 Bulletin 2021/46**

(51) Int Cl.:
***G05B 13/04*** *(2006.01)*

(21) Application number: **20020223.2**

(22) Date of filing: **15.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **L'AIR LIQUIDE, SOCIÉTÉ ANONYME POUR L'ÉTUDE ET L'EXPLOITATION DES PROCÉDÉS GEORGES CLAUDE**
**75007 Paris (FR)**

(72) Inventors:
• **Mighani, Moein**
**60323 Frankfurt am Main (DE)**
• **Gräbner, Martin**
**63755 Alzenau (DE)**

(74) Representative: **Stang, Stefan**
**Air Liquide Forschung und Entwicklung GmbH**
**Gwinnerstraße 27-33**
**60388 Frankfurt am Main (DE)**

(54) **METHOD TO CONTROL A GASIFIER BY MEANS OF A MULTIVARIATE MODEL PREDICTIVE CONTROLLER**

(57) The invention relates to a method to control a gasifier, wherein the gasifier is configured for the conversion of a carbonaceous fuel to a combustible product gas. The method comprises determining a plurality of operating parameters of the gasifier and recording the determined operating parameters in a data acquisition and recording system; selecting at least one of the determined operating parameters of the gasifier as a controlled variable (CV), and at least one of the determined operating parameters of the gasifier as a manipulated variable (MV); transferring the data of the CV and of the MV to a multivariate model predictive controller (MMPC), the MMPC comprising an optimizer, a dynamic model and a controller; minimizing a deviation between a current value of the CV and a set point of the CV by calculating a sequence of predictions of the CV by means of the dynamic model, on the basis of a sequence of calculated values of the MV by means of the optimizer, in an iterative process within a set prediction time horizon and set control horizon, wherein in the iterative process, the optimizer provides the sequence of calculated values of the MV to the dynamic model, and the dynamic model provides the sequence of calculated values of the CV to the optimizer; identifying an optimized value of the MV as a result of said iterative process and applying the optimized value of the MV to the gasifier by means of the controller. The invention further relates to a control unit for a gasifier, configured to execute the method according to the invention and to a gasifier, comprising said control unit.

Fig. 1

**Description**

**Technical field**

The invention relates to a method to control a gasifier, a control unit for a gasifier and a gasifier comprising said control unit. The gasifier is configured for the conversion of a carbonaceous fuel to a combustible product gas, in particular a synthesis gas.

**Background art**

In the gasification of carbonaceous fuels, in particular coal, the carbonaceous substance undergoes e.g. partial oxidation, if oxygen is used as the gasifying agent. Processes like partial oxidation are exothermic, leading to a high-temperature environment inside the gasifier, which permits further present gases such as carbon dioxide ($CO_2$) and steam to react with the carbonaceous feedstock. Steam is an example for an agent which is used as a moderator of the gasification reaction. The gaseous output of the gasification reaction is a combustible product gas, in particular a synthesis gas, also referred to as syngas. The main and also desired components of the syngas are carbon monoxide (CO) and hydrogen ($H_2$), whereby side-products such as carbon dioxide ($CO_2$) and methane ($CH_4$) are usually undesired components. The composition of the syngas is significantly depending on the properties of the solid or liquid carbonaceous fuel, i.e. the feedstock, as well as the gasification conditions including gasification temperature and pressure. The presence of complex chemical reactions imposes highly nonlinear interactions among relevant process parameters of the gasification process, coupled with long dynamic response times, making the operation and control of a gasifier complex and challenging. Additionally, various sources of fluctuations such as variety in feedstock properties and operational conditions cause inefficient operation of the gasifier.

Several methods are proposed in the prior art to automate and control the carbonaceous fuel gasification processes, in particular for coal. Most commonly, a proportional-integral-derivative (PID) control is proposed for control of the gasifier. In such technique, the set point of a specific fuel, i.e. the feeding coal feed, is input manually to the PID controller to obtain the required gasifier load. Sequentially, the set point of the feeding oxygen (gasifying agent) is automatically calculated by multiplying the actual feeding flow rate and a parameter known as oxygen-to-fuel ratio, i.e. oxygen-to-coal ratio, and then is sent to the PID controller of the feeding oxygen. Afterwards, the amount of feeding steam (moderator) is calculated by multiplying the actual feeding oxygen flow rate by another parameter known as steam-to-oxygen ratio and then is sent as the set point to the PID controller of the feeding steam flow. In such methods, as disclosed in CN 108342225, CN 102520736 and CN 105062569, the minimum and maximum allowable range of feeding fuel, oxygen and steam are correlated linearly to the pressure of gasification reactor.

According to CN 108342225 and CN 102520736, the proposed solution is based on a manual regulation of feeding coal flow based on required gasifier control and setting the feeding oxygen and steam by cascaded PID controllers using fixed oxygen-to-coal and steam-to-oxygen ratios. Since this method is a combination of manual and PID regulations, there are strong fluctuations expected in the operation like temperature and syngas yield fluctuations. Additionally, the changes are only made based on load and gasifier pressure, which do not fully describe the gasifier conditions like temperature, gas quality and conversion. This can lead to safety issues like temperature trips and inefficient operation due to low carbon conversion.

CN 209674253 proposes to utilize temperature measurements of the gasifier wall installed in different sections of the gasifier, coupled with a programmable controller. The programmable controller is used to keep the gasification temperature in a controlled range. As the measurements of the wall temperature of the gasifier are not accurate enough to be directly used in gasification control, this solution proposes that the temperature measurements are corrected via a model. However it is not disclosed how the temperature measurements should be modified and corrected for further use in the controller. Furthermore, it is well known from operation of coal gasifiers that slag build-up due to changing composition of the coal feedstock can cause contradicting trends of temperature evolution for the same operation parameters. Additionally, the method does not reveal how a controller should be set up and which variables are to be used for maintaining the control of a gasifier based on the corrected temperature measurement.

CN 105955020 suggests a coupling of dynamic matrix control (DMC) and PID control as combined DMC-PID control to improve the operation and control of a coal-water slurry gasification. In the DMC part of the method, the gasification reactor temperature is used as well as the carbon monoxide (CO) mole fraction of the produced syngas as controlled variables (CVs) to adjust the feeding oxygen flow and coal water slurry flow as manipulated variables (MVs) of the process. The adjustments in feeding oxygen flow and coal water slurry flow as the output of the DMC part are cascaded to PID controllers of the feeding oxygen flow (gasifying agent), feeding coal flow (feedstock), feeding water flow (moderator), oxygen-to-coal ratio controller and water-to-coal ratio controller to adjust the feed oxygen flow rate, the dry feed coal flow rate, the pumped coal water slurry flow rate and the feeding water flow rate to be mixed with dry coal. Additionally, the temperature of the gasification reactor and cooling chamber are controlled via cascaded PID control by adjusting the cooling water flow rate and oxygen-to-coal ratio. First order dynamic models are used therein to calculate the dynamic responses between MVs and CVs in the DMC part. This should overcome the problems caused by the use of a PID control of the gasification process. As the outputs of DMC part are cascaded with PID controllers, this solution is complex. Furthermore, in this solution only the gasifier temperature and the CO mole fraction of the syngas are used to regulate the feeding oxygen and coal-water slurry flows. However, in gasification, the gasifier temperature features long delay and is most often masked by other phenomena like coal slag. As coal-water slurry gasifiers use refractory lining, temperature measurements are biased by the state of degradation of the gasifier wall and are therefore highly unreliable. Also, using only CO mole fraction in syngas does not provide any information about the syngas yield and is specific to coal-water slurry systems. Therefore, this solution cannot control and optimize the effective syngas production. Moreover, this solution does not consider any disturbance variable and does not offer any solution for mitigating the fluctuations in operation caused by fluctuations in feedstock properties and gasification condition, thus it is incapable of rejecting disturbances of the gasification process effectively.

Hence, solutions have been proposed for better automation and control of coal gasification processes. However, most of the proposed solutions do not involve a combination of current relevant information of the gasifier conditions for predicting the future state of gasifier conditions, therefore taking proper control actions. Additionally, calculated parameters like feeding oxygen-to-coal ratio and feeding steam-to-oxygen ratio are fixed, although these quantities are depending on the feedstock properties, conveying gas properties and the like. So they should be regulated accordingly for the optimum control of the gasifier. Moreover, none of the proposed solutions addresses the problem of fluctuations in gasifier operation condition and disturbance rejection.

**Disclosure of the invention**

It is thus an object of the present invention to at least partly overcome the disadvantages of the prior art.

It is a further object of the present invention to provide a method that enables improved controllability of a gasifier.

It is a further object of the present invention to increase the efficiency of the gasification process. In particular, it is an object of the present invention to increase the efficiency of the gasification process based on improved controllability of the gasifier.

It is a further object of the present invention to improve the yield of combustible product gas of the gasification process and at the same time minimize the formation of undesirable by-products.

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

The aforementioned objects are at least partly achieved by a method to control a gasifier, the gasifier being configured for the conversion of a carbonaceous fuel to a combustible product gas, the method comprising

(a) Determining a plurality of operating parameters of the gasifier and recording the determined operating parameters in a data acquisition and recording system;
(b) Selecting at least one of the determined operating parameters of the gasifier as a controlled variable (CV), and at least one of the determined operating parameters of the gasifier as a manipulated variable (MV);
(c) Transferring the data of the CV and of the MV to a multivariate model predictive controller (MMPC), the MMPC comprising an optimizer, a dynamic model and a controller;
(d) Minimizing a deviation between a current value of the CV and a set point of the CV by calculating a sequence of predictions of the CV by means of the dynamic model, on the basis of a sequence of calculated values of the MV by means of the optimizer, in an iterative process within a set prediction time horizon and set control horizon, wherein in the iterative process, the optimizer provides the sequence of calculated values of the MV to the dynamic model, and the dynamic model provides the sequence of calculated values of the CV to the optimizer;
(e) Identifying an optimized value of the MV as a result of said iterative process and applying the optimized value of the MV to the gasifier by means of the controller.

According to the invention, a solution is provided which comprises the development and implementation of a multivariate model predictive controller (MMPC) scheme for control of a gasification process. The MMPC controls and optimizes the operation of the gasifier. The MMPC comprises an optimizer, the actual dynamic model or a plurality of dynamic models, and a controller.

As the optimizer is involved in minimizing a deviation between a current value of the CV and a set point of the CV by means of said iterative process, the optimizer may also be referred to as a "minimizer".

A dynamic model is developed prior to its application within the MMPC scheme according to step (d), e.g. by combining gasification process know-how with advanced process control know-how. In the development phase of the dynamic model, sources of disturbance may be identified which e.g. result from fluctuations in the quality of the carbonaceous fuel (analysis data of the feedstock) or oscillations resulting from specific operational circumstances such as blow-off cycles or steam pressure fluctuations.

Furthermore, for developing the dynamic model, different kinds of operating parameters are identified and assigned to different kinds of variable types, including but not limited to manipulated variables (MV), controlled variables (CVs), intermediate variables (IVs), process output variables (POVs), and disturbance variables (DVs). A mathematical dynamic model is then developed which explains the relationship between a CV as an intended model output variable and possible model inputs including different sets of MVs, IVs and DVs or combinations thereof. For each variable set, an operational range may be defined, i.e. an allowable minimum and maximum value. Furthermore, an allowable rate of change each of the defined variable sets may be defined. Afterwards, the derived dynamic model is formulated between the operational variable sets in the format of a mathematical optimization objective function for the calculation of the best operational changes and regulations in order to control the gasifier under optimal conditions.

For applying the developed dynamic model in the inventive method to control a gasifier, a plurality of operating parameters of the gasifier is first determined and the determined operating parameters are recorded in a data acquisition and recording system according to a first method step (a). An operating parameter of the gasifier may be any parameter which can either be set as an input process parameter or which can be measured during operation of the gasifier as an output process parameter. The data acquisition and recording system may either be a programmable logic controller (PLC) or a distributed control system (DCS), without being limited to these types.

According to a second method step (b), at least one of the determined operating parameters of the gasifier is selected as a controlled variable (CV), and at least one of the determined operating parameters of the gasifier is selected as a manipulated variable (MV).

Controlled variables (CVs) are variables that are desired to be kept in a specific condition. Such a specific condition may be keeping the CV between a lower and an upper limit, keeping the CV close to the set point or keeping the CV at the set point. In other words, it is the objective of the control process to keep a determined operating parameter, which is selected as a CV, in a specific pre-defined condition. According to an example, the methane ($CH_4$) concentration in the combustible product gas may be selected as a CV and shall be kept between a lower and an upper allowed methane concentration (combustible product gas is free of methane) as a lower limit.

Manipulated variables (MVs) are variables that can be physically changed to drive the process towards desired conditions in view of the set point or set range of the CVs. In other words, it is an objective of the control process to set a manipulated variable so that the CV is within the specific pre-defined condition. Under ideal circumstances, the CV is at the desired set point. According to an example, the mass flow of the carbonaceous fuel, the mass flow of a gasifying agent (e.g. oxygen or air), or the mass flow of a moderator (e.g. steam) are manipulated variables. Manipulated variables are often also referred to as "actuating variables".

According to a third method step (c), the data of the CV and of the MV is transferred to a multivariate model predictive controller (MMPC), wherein the MMPC comprises an optimizer, a dynamic model and a controller. During the control process, the core of the optimizer and of the dynamic model are constantly in contact via sending and receiving real time data back and forth. The MMPC may be installed on a separate computer.

According to a fourth method step (d), a deviation between a current value of the CV and a set point of the CV is minimized by calculating a sequence of predictions of the CV by means of the dynamic model or by means of a plurality of dynamic models, on the basis of a sequence of calculated values of the MV by means of the optimizer. This is done in an iterative process within a set prediction time horizon and set control horizon, wherein in the iterative process, the optimizer provides the sequence of calculated values of the MV to the dynamic model, and the dynamic model provides the sequence of calculated values of the CV to the optimizer. In other words, according to step (d), the optimizer may provide a first value of a MV which may correspond to the current value of said MV. On the basis of this first value of the MV, the dynamic model calculates a first predicted value for the CV, which deviates from the set point of the CV by a certain amount. The amount of this deviation shall be minimized. Based on the first predicted value of the CV, the optimizer proposes a second value of the MV and sends it back to the dynamic model, which in turn calculates a second predicted value for the CV. The aforementioned steps are repeated in an iterative manner over the set prediction horizon and set control horizon until the deviation of the actual CV from the set point of the CV is minimized. The prediction horizon is the time period which is used by the dynamic model for calculating the sequence of predicted values of the CV. The control horizon is the time period which is used by the optimizer to calculate the sequence of values of the MV provided to the dynamic model. The control horizon cannot outrun the prediction horizon, i.e. the time period of the control horizon is shorter than the time period of the prediction horizon.

According to a fifth method step (e), an optimized value of the MV is identified as a result of the iterative process according to method step (d). The optimized value of the MV is applied to the gasifier by means of the controller. In other words, the MV value calculated according to the iterative process of step (d) is set by the controller and results in an optimized CV value which does not or only minimally deviate from the desired set point value of the CV.

A preferred embodiment of the method according to the invention is characterized in that at least one of the determined operating parameters of the gasifier is selected as a disturbance variable (DV).

According to this embodiment, the data of the selected DV is additionally transferred to the multivariate model predictive controller (MMPC) and the DV values are used in the dynamic model or plurality of dynamic models and the optimizer to minimize a deviation between a current value of the CV and a set point of the CV according to method step (d). DVs are variables that cannot be controlled or changed directly, but they may adversely affect the dynamics and the response of the gasification process. It is therefore preferred that their effect is to be cancelled via proper control actions. Identification of the sources of disturbance of the gasification process as DVs may therefore be vital for effectiveness of the application of the MMPC control scheme.

A preferred embodiment of the method according to the invention is characterized in that at least one of the determined operating parameters of the gasifier is selected as a process output variable (POV).

According to this embodiment, the data of the POV is additionally transferred to the multivariate model predictive controller (MMPC) and the POV values are used in the dynamic model or the plurality of dynamic models and the optimizer to minimize a deviation between a current value of the CV and a set point of the CV according to method step (d). POVs are process parameters that are not intended to be changed or controlled, but may be used for estimation or calculation of other important properties of the gasification process.

A preferred embodiment of the method according to the invention is characterized in that at least one of the determined operating parameters of the gasifier is selected as a calculated intermediate variable (IV), wherein the IV is calculated by combining at least two different variables, said variables being selected from the list comprising a controlled variable (CV), a manipulated variable (MV), a disturbance variable (DV) and a process output variable (POV).

According to this embodiment, the data of the IV is additionally transferred to the multivariate model predictive controller (MMPC) and the IV values are used by the dynamic model or the plurality of dynamic models and the optimizer to minimize a deviation between a current value of the CV and a set point of the CV according to method step (d). IVs are variables that may be used to model combined effects of MVs, CVs, DVs and POVs. IVs may be kept in specific boundaries or defined as a set point just as CVs. IVs are always calculated based on the values of the combined variables selected. An IV may be specifically selected in case a combination of two selected variables shows a significant combined effect on the gasification process.

A preferred embodiment of the method according to the invention is characterized in that the controlled variable (CV) is selected from at least one element of the list comprising

- effective combustible product gas production;
- methane ($CH_4$) concentration in the combustible product gas;
- carbon dioxide ($CO_2$) concentration in the combustible product gas;
- a gasifier wall temperature.

The effective combustible product gas production is the flow rate of the dry desired gas components in the combustible product gas. In an example, the effective combustible product gas production is the effective syngas production, i.e. the flow rate of dry carbon monoxide (CO) and hydrogen ($H_2$) in the combustible product gas. It may be determined in Nm3/h. The value shall be as high as possible. Methane and carbon dioxide are usually undesired components in the combustible product gas. Their values shall be as low as possible. Furthermore, it was found that the methane concentration in the combustible product gas is a strong indicator for the temperature inside the gasifier, which cannot be measured directly. Furthermore, it was found that the carbon dioxide concentration in the combustible product gas is a strong indicator for both the temperature and the conversion inside the gasifier. The methane concentration in the combustible product gas may be determined in ppm (volume). The carbon dioxide concentration in the combustible product gas may be determined in %vol. The gasifier wall temperature may additionally represent the actual gasification temperature. Hence, it influences the gasification process in terms of combustible product gas yield and formation of undesired side products such as methane and carbon dioxide. Therefore, the gasifier wall temperature should be kept within a certain temperature range.

A preferred embodiment of the method according to the invention is characterized in that the manipulated variable (MV) is selected from at least one element of the list comprising

- mass flow of the carbonaceous fuel;
- volumetric flow of a gasification agent;
- volumetric flow of a moderator.

The gasification process can be controlled in an effective manner mainly by the optimal determination of the MVs by the MMPC, so that optimized CVs result. The most important MVs identified are the mass flow of the carbonaceous fuel, and the respective volumetric flows of the gasification agent and the moderator. In an example, the mass flow of the carbonaceous fuel is the mass flow of coal. Said mass flow may be determined in kg/h. In an example, the volumetric flow or flow rate of the gasification agent is the volumetric flow of Oxygen or air. It may be determined in Nm3/h. In an example, the volumetric flow of the moderator is the volumetric flow of steam. It may be determined in kg/h.

A preferred embodiment of the method according to the invention is characterized in that the disturbance variable (DV) is selected from at least one element of the list comprising

- a pressure difference between a feeding tank comprising the carbonaceous fuel and the gasifier;
- a density of steam generated in a cooling system of a gasification reactor, wherein the gasification reactor forms part of the gasifier;
- a mass flow of steam generated in a cooling system of a gasification reactor, wherein the gasification reactor forms part of the gasifier.

Using disturbance variables in the dynamic model of the MMPC scheme results in further improvements of the controllability of the process. The feeding tank comprising the carbonaceous fuel, e.g. coal, is fluidly connected to the gasifier. The pressure difference between the feeding tank which comprises the carbonaceous fuel and the gasifier is induced by fuel pressurization cycles in the feeding system. It causes systematic peaks in almost all mentioned operational parameter signals due to the disturbance of the carbonaceous fuel flow. In an example, the pressure difference between a feeding tank comprising the carbonaceous fuel and the gasifier is the pressure difference between a feeding tank comprising a solid carbonaceous fuel, in particular coal, and the gasifier. The pressure difference may be determined in kPa.

The part of the gasifier in which the gasification reaction takes place may be referred to as the gasification reactor. The gasification reactor may comprise a cooling system. Several cooling systems are known in the art and may be selected from a cooling jacket, a cooling coil, a membrane wall or combinations thereof.

The density of steam generated in a cooling system of the gasification reactor and the mass flow of steam generated in a cooling system of the gasification reactor both are dependent on the steam pressure and are sensitive to its fluctuations in the cooling system of the gasification reactor. Those steam pressure fluctuations indicate disturbances to the gasification process. Furthermore, the steam mass flow and density in the cooling system of the gasification reactor is a strong indicator for the temperature within the gasification reactor, which cannot be measured directly. When the feeding cooling water is provided with a fixed flowrate, under ideal conditions, e.g. no temperature changes in the gasification reactor, the generated steam should not change in the amount produced or its density. Steam is generated in the cooling system of the gasification reactor through the evaporation of the cooling water. The density of steam generated in the cooling system of the gasification reactor may be determined in $kg/m^3$. The mass flow of steam generated in the cooling system of the gasification reactor may be determined in kg/h.

A preferred embodiment of the method according to the invention is characterized in that the process output variable (POV) is selected from at least one element of the list comprising

- a volume fraction of carbon monoxide (CO) in the combustible product gas;
- a volume fraction of hydrogen ($H_2$) in the combustible product gas;
- a pressure of the combustible product gas;
- a temperature of the combustible product gas.

POVs are process parameters that are not intended to be changed or controlled, but are used for estimation or calculation of other important properties. The volume fractions of $H_2$ and CO together with temperature and pressure of the combustible product gas may be used to calculate the amount of the dry combustible product gas in view of the desired components ($H_2$ and CO). In an example, the dry combustible product gas is syngas. The volume fraction of carbon monoxide or hydrogen in the combustible product gas may be determined in %vol. The pressure of the combustible product gas may be determined in MPa. The temperature of the combustible product gas may be determined in °C.

A preferred embodiment of the method according to the invention is characterized in that the intermediate variable (IV) is selected from at least one element of the list comprising

- a ratio of a the mass of a gasifying agent and the mass of the carbonaceous fuel;
- a ratio of a mass of a gasifying agent and the mass of a moderator;
- a first mass flow of the carbonaceous fuel and a second mass flow of the carbonaceous fuel;

Using intermediate variables (IVs) in the dynamic model means considering combined effects of variables, which results in further improved controllability and effectiveness of the gasification process. In particular, the ratio of mass of a gasifying agent and the mass of the carbonaceous fuel, the ratio of the mass of a gasifying agent and the mass of a moderator, and a first and second mass flow of the carbonaceous fuel were determined as most important intermediate variables.

A first and second mass flow of the carbonaceous fuel means the sum of the first and second mass flow. In an example, the sum of the first and second mass flow of the carbonaceous fuel is the total mass flow of the carbonaceous fuel. The first and second mass flows of the carbonaceous fuel may also referred to as first partial mass flow and second partial mass flow. Further mass flows or partial mass flows may be applicable, e.g. a third, fourth, fifth and/or sixth mass flow or partial mass flow. The mass flows or partial mass flows sum up to a total mass flow. Any mass flow or partial mass flow may be controlled separately. Hence, combinations of mass flows or partial mass flows are intermediate variables (IVs).

The ratio of the mass of a gasifying agent and the mass of the carbonaceous fuel, and the ratio of the mass of a gasifying agent and the mass of a moderator may be determined in weight per weight, e.g. in kg/kg. The first mass flow of the carbonaceous fuel and the second mass flow of the carbonaceous fuel may be determined in kg/h.

A preferred embodiment of the method according to the invention is characterized in that the dynamic model or the plurality of dynamic models uses/use at least one element selected from the list of a MV, DV, IV and POV as an input parameter, to predict a value of a CV as an output parameter for the control process.

In order to carry out the dynamic optimization and control by the MMPC, the MMPC utilizes a dynamic model or a plurality of dynamic models of the gasification process. The input of a dynamic model for the gasifier include MVs, DVs, IVs or POVs, while the outputs are CVs. The task of the dynamic model is to calculate the dynamic response of CVs with regard to changes in MVs, DVs, IVs or POVs. For example, process time delays between process variables and responses, rate of change in different variables and the behavior of process variables while reaching towards the process steady state gains are dynamic behaviors explained and estimated via the developed dynamic model of the MMPC.

A preferred embodiment of the method according to the invention is characterized in that in an identification phase of the dynamic model, a single MV is modelled against a related CV and/or IV.

A further preferred embodiment of the method according to the invention is characterized in that in an identification phase of the dynamic model, a DV, POV or IV is separately modelled against its relevant CV.

During the identification phase each single MV is modeled against related CV or IV. Further preferred, each DV, POV or IV is separately modeled versus its relevant CV.

A preferred embodiment of the method according to the invention is characterized in that the dynamic model is identified by a closed loop system identification, an open loop system identification or a combination thereof.

The task of developing a dynamic model is referred to as system identification. For performing an effective system identification, two approaches are conceivable with regard to the present invention. Those approaches are referred to as closed loop system identification and open loop system identification. Also a combination of both approaches is conceivable in developing the dynamic model for the MMPC control scheme.

In closed loop system identification, available historical data from previous operation is used in the model fitting and development phase. After spotting the suitable time segments in the operational data, these segments can be used in the dynamic model development phase.

In open loop system identification, sequential changes are applied on each MV at a time to record and collect the response of different CVs. In an example, a sequential change is a step test. After this, the collected data is used for developing the dynamic model.

Possible dynamic models may be stored in a matrix helping to map the developed connections between control variable sets. This matrix is referred to as dynamic matrix control (DMC) and may form the basis of the MMPC scheme for process variables estimation and control actions calculations according to method step (d) of the present invention.

The parametric transfer function models in Laplacian domain are used for dynamic modeling of the gasifier. These models can include several parameters, namely, $s$ as the Laplacian variable, *Gain* as the process gain, *Delay* as the process time delay, $\tau_1$ and $\tau_2$ as the process time constants and $\beta$ as the free parameter. During identification, the suitable model type and its parameters for accurate modeling is calculated. The following table presents possible models that may be used.

| Model Type | Equation |
|---|---|
| Gain | $G(s) = Gain$ |
| Gain Delay | $G(s) = Gain * e^{-Delay*s}$ |
| Gain Delay Ramp | $G(s) = Gain * \dfrac{e^{-Delay*s}}{s}$ |

(continued)

| Model Type | Equation |
|---|---|
| First Order | $G(s) = Gain * \dfrac{e^{-Delay*s}}{\tau_1 * (s+1)}$ |
| First Order Ramp | $G(s) = Gain * \dfrac{e^{-Delay*s}}{\tau_1 * (s+1) * s} * (\beta * s + 1)$ |
| First Order Beta | $G(s) = Gain * \dfrac{e^{-Delay*s}}{\tau_1 * (s+1) * s}$ |
| Second Order | $G(s) = Gain * \dfrac{e^{-Delay*s}}{\tau_1 * (s+1) + (\tau_2^2 * s^2)}$ |
| Second Order Ramp | $G(s) = Gain * \dfrac{e^{-Delay*s}}{\left(\tau_1 * (s+1) + (\tau_2^2 * s^2)\right) * s}$ |
| Second Order Beta | $G(s) = Gain * \dfrac{e^{-Delay*s}}{\tau_1 * (s+1) + (\tau_2^2 * s^2)} * (\beta * s + 1)$ |
| Second Order Beta Ramp | $G(s) = Gain * \dfrac{e^{-Delay*s}}{\left(\tau_1 * (s+1) + (\tau_2^2 * s^2)\right) * s} * (\beta * s + 1)$ |
| Zero Gain First Order | $G(s) = Gain * s * \dfrac{e^{-Delay*s}}{\tau_1 * (s+1)}$ |
| Zero Gain Second Order | $G(s) = Gain * s * \dfrac{e^{-Delay*s}}{\tau_1 * (s+1) + (\tau_2^2 * s^2)}$ |
| Zero Gain Second Order Beta | $G(s) = Gain * s * \dfrac{e^{-Delay*s}}{\tau_1 * (s+1) + (\tau_2^2 * s^2)} * (\beta * s + 1)$ |

A preferred embodiment of the method according to the invention is characterized in that the MMPC uses an optimization algorithm according to

$$f = \sum_{i=1}^{n_y} \left\| w_y \left( S_i - Y_{Estimated,i} \right) \right\|_2^2 + \sum_{i=1}^{n_u} \left\| w_u \left( \Delta U_i \right) \right\|_2^2$$

$$\min_{\Delta U} f \ \text{ by satisfying constraint}$$

wherein

$S_i$ is the set point of the CV to be achieved,
$Y_{Estimated,i}$ is the CV predicted by the dynamic model,
$\Delta U_i$ is the change to be applied on a MV,
$w_y$ and $w_u$ are regulating parameters which affect the aggressiveness and robustness of the optimization,
$n_y$ is the prediction horizon and
$n_u$ is the control horizon.

After developing a suitable dynamic model as set out above, an optimization formulation of the dynamic control problem is being worked out. The solution of such a dynamic optimization will be the optimum changes and regulation on the MVs (inputs) to keep the gasifier under optimal control. Additionally, there are process operation and safety boundaries to be imposed as constraints upon this optimization formulation. For example, in the gasification of coal, it is desired to keep the feeding oxygen-to-coal ratio in a specific span to ensure the optimal operation and avoid safety issues. Such conditions can be formulated as constraints of the optimization formulation. In general, the aforementioned optimization algorithm may be preferably implemented for optimal control. The job of the solver is to find the best $\Delta U_i$ which result in minimizing the $f$ while satisfying the imposed constraints. The DMC (dynamic model) and optimizer core are constantly in contact via sending and receiving the real time data back and forth.

The objects of the invention are also at least partly achieved by a control unit for a gasifier, configured to execute the method according to the invention.

The objects of the invention are also at least partly achieved by a gasifier, comprising the aforementioned control unit.

In one embodiment, the gasifier is configured for the conversion of a carbonaceous fuel to a combustible product gas.

In one embodiment, the carbonaceous fuel is a solid fuel, in particular coal, and the combustible product gas is a synthesis gas. Synthesis gas is also referred to as "syngas". Instead of or additional to coal, the solid fuel may also comprise biomass, sewage sludge, refuse derived fuel and/or mineral-contaminated plastics, without being limited to the aforementioned carbonaceous fuel types.

Carbonaceous fuel, gasification

The carbonaceous fuel may comprise any carbon containing feedstock in solid, liquid and/or gaseous state. The solid, liquid and/or gaseous carbonaceous fuel is suitable for conversion to the combustible product gas. The conversion of the carbonaceous fuel to the combustible product gas takes place under gasification conditions. Gasification refers to any chemical conversion of a single or multiple component chemical reaction, wherein at least one of the reacting components (reactants) of the reaction is subjected to partial oxidation. The partial oxidation results in a single or multiple components product gas, in which at least one of the gaseous product components may further oxidized, i. e. is combustible. The partial oxidation may take place under the influence of oxygen or any other suitable oxidation agent.

**Execution example**

The invention is elucidated in detail hereinafter by an example how to carry out the invention without restricting the subject-matter of the invention. Further features, advantages and possible applications of the invention will be apparent from the following description of the execution example in conjunction with the drawings.

The examples in the figures refer to a gasifier for the gasification of coal as an example for a solid carbonaceous fuel, to produce synthesis gas as an example for a combustible product gas.

In the drawings,

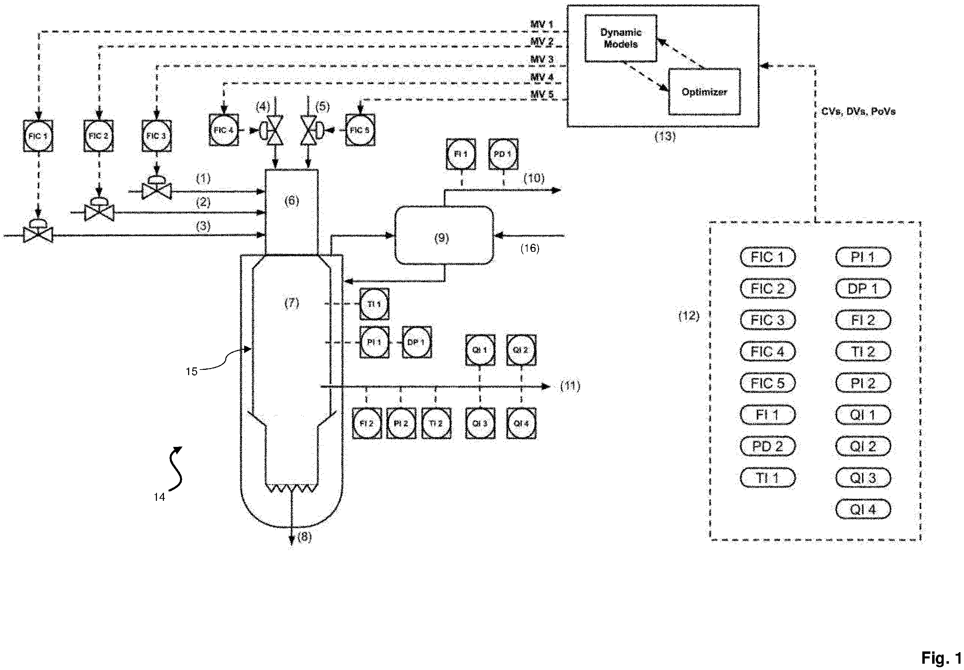

Figure 1          depicts an overall scheme of a gasifier for gasification of coal and a control unit configured to execute the method according to the invention,

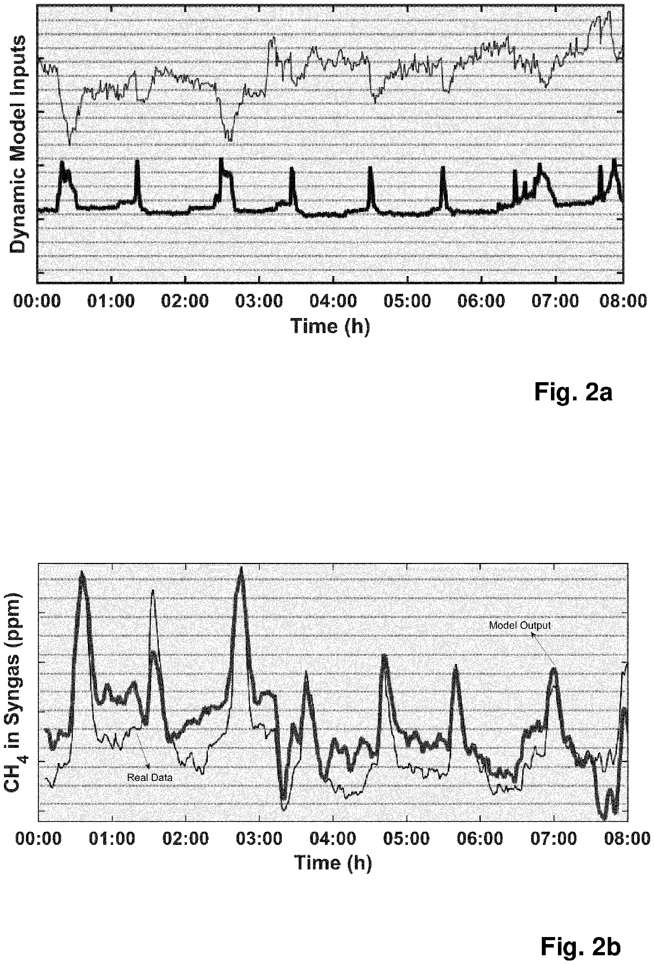

Figures 2a, 2b     depict an example of dynamic model response for the $CH_4$ concentration in the synthesis gas as controlled (model output) variable (Fig. 2b, in ppm), and having the ratio of $O_2$/ total coal as an intermediate (model input) variable and the pressure difference between the coal feeding tank and the gasifier as disturbance (model input) variable (Fig. 2a),

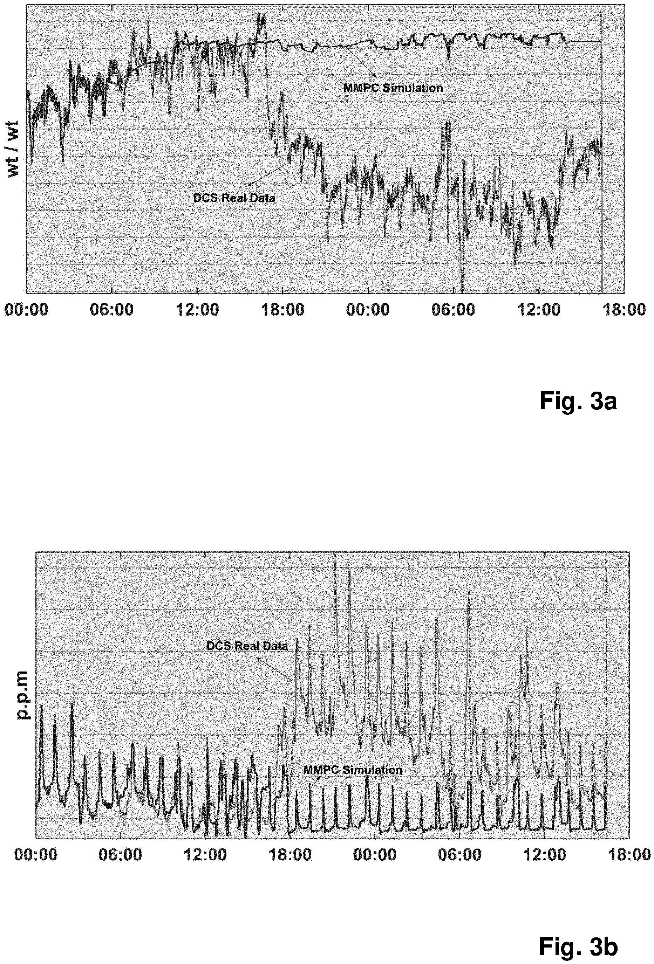

Figures 3a, 3b     depict a simulation of the operation of a gasifier with and without implementation of the method according to the invention, for the ratio of $O_2$/ total coal as intermediate (process input) variable (Fig. 3a, in wt/wt) and $CH_4$ concentration in the synthesis gas as controlled (process output) variable (Fig. 3b, in ppm).

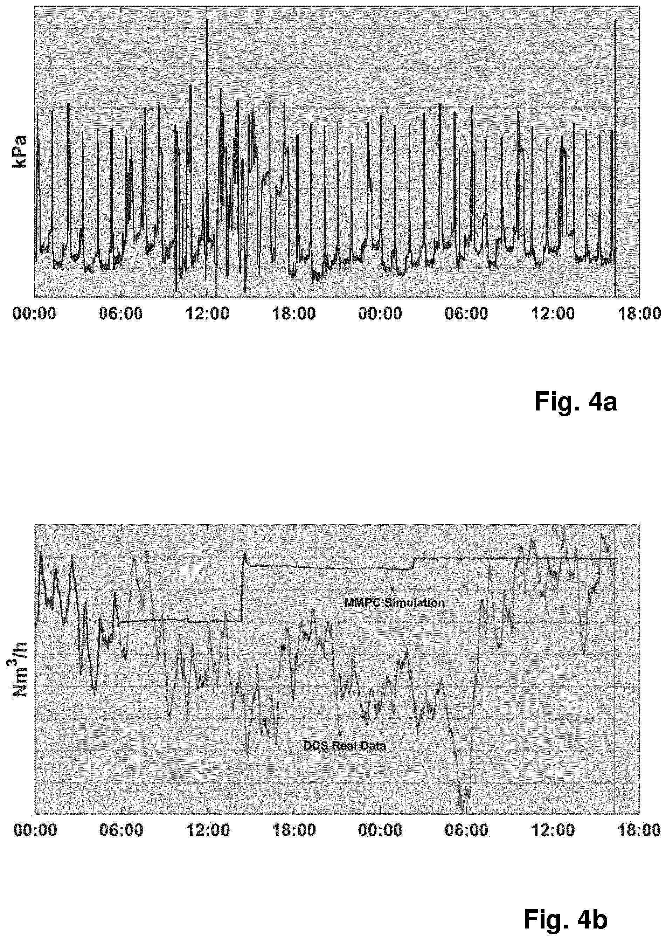

Figures 4a, 4b     depict a simulation of the pressure difference between the coal feeding tank and the gasifier during operation of a gasifier (Fig. 4a, $\Delta P$ in kPa) and a simulation of the effective synthesis gas production as a controlled (process output) variable with and without implementation of the method according to the invention (Fig. 4b, $Nm^3$/h).

Figure 1 shows a gasifier for gasification of coal and a control unit configured to execute the method according to the invention. The gasifier 14 comprises a burner 6, a gasification reactor 7 and a slag flow discharge 8 for the removal of ash residues from the gasification process. The gasifier is further equipped with a cooling system 15 through which cooling water flows for abating the temperature of the gasifier 14 in the gasification reactor 7. The cooling system 15 of the gasifier 14 is fluidly in connection with a steam drum 9 for the steam generated through cooling of the gasification process. The steam drum 9 is fluidly connected to a cooling water feeding line 16 which provides boiler feed water for usage as the cooling water in the cooling system 15. The generated steam is discharged from the process via steam line 10 and may be used as export steam.

The gasifier is further equipped with three separate coal feeding lines 1, 2 and 3, one oxygen feeding line 4 and one steam feeding line 5. The coal feeding lines and the gasification reactor are under elevated pressure, for example at a pressure between 30 and 40 bar. Coal, oxygen and steam enter the gasifier 14 via the burner 6 and are gasified under partial oxidation conditions in the gasification reactor 7 to produce synthesis gas as the desired combustible product gas. The produced synthesis gas, which is sent via synthesis gas line 11 to a downstream unit (not shown) may contain undesired side products such as carbon dioxide and methane. The three coal feeding lines 1,2 and 3, the oxygen feeding line 4 and the steam feeding line 5 are equipped with control valves.

The control unit of the gasifier comprises a multivariate model predictive controller (MMPC) 13, which comprises a plurality of dynamic models (referred to as "dynamic models"), an optimizer and a controller (controller not shown). The control valves of the feeding lines 1-5 can receive and execute desired control and regulation actions from the MMPC in the form of calculated manipulated variable data received from the MMPC.

The control unit of the gasifier further comprises a plurality of flow controllers, indicators and analyzers which are listed in the following table.

| Ref. No. | Description |
|----------|-------------|
| FIC 1 | Coal Line 1 Flow Controller |
| FIC 2 | Coal Line 2 Flow Controller |
| FIC 3 | Coal Line 3 Flow Controller |
| FIC 4 | Oxygen Flow Controller |
| FIC 5 | Steam Flow Controller |
| FI 1 | Generated Steam Flow Indicator |
| PD 2 | Generated Steam Density Indicator |
| TI 1 | Gasifier Wall Temperature Indicator |
| PI 1 | Gasifier Pressure Indicator |
| DP 1 | Gasifier Pressure Difference Indicator |
| FI 2 | Output Syngas Flow Indicator |
| TI 2 | Output Syngas Temperature Indicator |
| PI 2 | Output Syngas Pressure Indicator |
| QI 1 | Analyzer for $CO_2$ Concentration in Output Syngas |
| QI 2 | Analyzer for $CH_4$ Concentration in Output Syngas |
| QI 3 | Analyzer for CO Concentration in Output Syngas |
| QI 4 | Analyzer for $H_2$ Concentration in Output Syngas |

Coal line controllers FIC 1, FIC 2 and FIC 3 control the coal flow in coal feeding lines 1-3. The value of the coal flow in coal feeding lines 1-3 is represented by manipulating variables MV 1, MV 2 and MV 3 which are regulated and controlled by the controller of the MMPV 13, based on calculations performed by the dynamic models and optimizer of the MMPV 13. Oxygen flow controller FIC 4 controls the oxygen flow in oxygen feeding line 4. The value of the oxygen flow in oxygen feeding line 4 is represented by manipulating variable MV 4, which is again regulated and controlled by the controller of the MMPV 13, based on calculations performed by the dynamic models and optimizer of the MMPV 13. Steam flow controller FIC 5 controls the steam flow in steam feeding line 5. The value of the steam flow in steam feeding line 5 is represented by manipulating variable MV 5, which is again regulated and controlled by the controller of the MMPV 13, based on calculations performed by the dynamic models and optimizer of the MMPV 13.

The generated steam flow indicator FI 1 and the generated steam density indicator PD 2 measure the steam flow and the steam density of steam line 10. Although the flow of cooling water in the cooling water feeding line 16 and the cooling system 15 is fixed, the steam flow and the steam density in steam line 10 varies due to temperature fluctuations in the gasification reactor 7. Therefore, variations of the steam flow measured by steam flow indicator FI 1 and variations of the steam density measured by steam density indicator PD 2 are indicators for temperature fluctuations in the gasification reactor 7. Hence, steam density and steam flow represent disturbance variables (DVs) of the process.

The wall temperature of the gasifier is measured by gasifier wall temperature indicator TI 1. The gasifier wall temperature shall be kept within a controlled range, e.g. for safety reasons and controllability of the gasification reaction, and therefore represents a controlled variable (CV) of the process.

The pressure in the gasification reactor 7 is measured by gasifier pressure indicator PI 1. The gasifier pressure shall be kept within a controlled range, e.g. for safety reasons and controllability of the gasification reaction. Since it is determined by downstream operation, e.g. pressure drops, it represents a disturbing variable (DV) of the gasification process.

The syngas pressure in synthesis gas line 11 is measured by output syngas pressure indicator PI 2. The syngas temperature in synthesis gas line 11 is measured by output syngas temperature indicator TI 2. Syngas pressure and syngas temperature are parameters that are not intended to be changed or controlled. Therefore, syngas temperature and pressure represent process output variables (POVs) of the process.

The syngas flow in synthesis gas line 11 is measured by the output syngas flow indicator FI 2. The syngas flow indicates the effective syngas production (determined in Nm3/h, i.e. normalized to standard temperature and pressure). Since the effective syngas production is crucial for the effectiveness of the gasification process, it represents a controlled variable (CV) of the process. The effective syngas production may be calculated directly from the wet syngas flow, and process output variables (POVs) including the syngas temperature and pressure, and the hydrogen and carbon monoxide concentrations in the syngas.

The concentration of carbon dioxide ($CO_2$) in the syngas of synthesis gas line 11 is measured by the analyzer for $CO_2$ concentration in output syngas QI 1. The concentration of methane ($CH_4$) in the syngas of synthesis gas line 11 is measured by the analyzer for $CH_4$ concentration in output syngas QI 2. Carbon dioxide and methane are undesired products of the gasification reaction. Therefore, the concentrations of carbon dioxide and methane in the synthesis gas shall be kept within a controlled range, e.g. between a pre-defined acceptable lower and upper limit. The concentrations of carbon dioxide and methane represent controlled variables (CVs) of the process accordingly.

The concentration of carbon monoxide (CO) in the syngas of synthesis gas line 11 is measured by the analyzer for CO concentration in output syngas QI 3. The concentration of hydrogen ($H_2$) in the syngas of synthesis gas line 11 is measured by the analyzer for $H_2$ concentration in output syngas QI 4. The ratio between hydrogen and carbon monoxide in the synthesis gas depends on the carbon- and hydrogen-content of the feedstock (fuel), which is used in the gasification reaction, and gasifier operating conditions, e.g. temperature and pressure. Since this ratio is governed by complex chemical equilibrium reactions, this ratio cannot be used by process regulation and control measures. Therefore, concentrations of carbon monoxide and hydrogen represent process output variables (POVs) of the process accordingly.

The data of the various flow controllers, indicators and analyzers mentioned before is collected in real time in data acquisition and recording system 12. The data acquisition and recording system 12 is either a programmable logic controller (PLC) or a distributed control system (DCS). The data acquired and recorded in system 12, which represents the CVs, DVs and POVs of the process, is transferred to the multivariate model predictive controller (MMPV) 13. The MMPV may calculate intermediate variable (IV) data based on the input data from CVs, DVs and POVs in case a combined effect between at least two of the aforementioned variable types exists. On basis of the different CVs, DVs, POVs and IDs acquired, recorded and calculated, the dynamic models and the optimizer calculate how the MVs MV 1, MV2, MV3, MV4 and MV 5 have to be changed to minimize a deviation of a current CV of the process from the set point of the respective CV. This is done in an iterative process of calculations within a set prediction and control horizon as described in detail before. The optimal value for each of the MV1, MV2, MV3, MV4 and MV5 is set, i.e. actuated by the controller of the MMPV, which regulates and controls the control valves of the feeding lines 1 to 5. In other words, the outputs of the MMPC are the new MV set points for the three coal feeding lines 1 to 3, the oxygen feeding line 4 and the steam feeding line 5. Sequentially, the control valves over each feeding line regulate the corresponding flow to reach the received set point from the MMPC. Via iterating over the aforementioned inventive procedure, the control and operation of the gasifier is kept under optimal conditions. For instance, the methane and carbon dioxide concentration in the synthesis gas is kept at a minimum.

Fig. 2a shows an example for two different dynamic model input variables and how their values change over a period of 8 hours. The bold line shows the change in pressure difference between the feeding tank for the carbonaceous fuel (coal) and the gasifier, which may be measured in kPa. This pressure difference is assigned as a disturbance variable (DV) for the development of a dynamic model. The thin line shows the change in the ratio of the mass of a gasifying agent (oxygen) and the mass of the carbonaceous fuel (coal). This ratio is assigned as an intermediate variable (IV) for the development of the dynamic model, as it is a combination of two basic variables. As Figure 2b shows, in particular the pressure difference peaks cause changes in the formation of methane, which in turn is an indicator for temperature changes in the gasifier. The thin line of Fig. 2b shows real measured data of the methane concentration in ppm. The bold line of Fig. 2b shows data calculated, i.e. predicted by the developed dynamic model on basis of a closed loop system identification approach.

The implementation of the method according to the invention was simulated to demonstrate its ability to deliver the mentioned benefits. Figures 3a, 3b, 4a and 4b demonstrate the operation of the gasifier with and without implementation of the solution according to the inventive method.

In the first 6 hours of simulation the MMPC is off and the shown data is solely real operational data taken from the distributed control system (DCS) of the data acquisition and recording system. After about 6 hours, the MMPC solution is turned on with the primary focus of stabilizing the operation with regard to ratio of oxygen to total coal (intermediate variable), $CH_4$ concentration in the synthesis gas (controlled variable) and the effective syngas production (controlled variable). After 10 hours of stable operation, when the stability is ensured, the constraints of maximization of produced effective syngas is applied (Fig. 4b). During the overall simulation, signals for DVs were taken from real operational data and were fed as feed forward signals (Fig. 4a). As it can be seen in Fig. 3a, after turning the MMPC on, the fluctuations in the ratio of oxygen to total coal have been mitigated by around 80% which corresponds to tighter and smoother control actions over available MVs related to oxygen and coal input flows.

Real operational data in Figures 3a, 3b and 4b after the first 18 hours of operation reflect suboptimal operation and control actions. The effect of deviation from the optimal ratio of oxygen to total coal set point (seen in Fig. 3a) can be traced in a higher concentration of $CH_4$ in the produced synthesis gas for a long period (Fig. 3b). The higher $CH_4$ concentration corresponds to low temperature operation of the gasifier, which is in turn leading to inefficiency and reduced conversion. Such deviations from optimal operational window coupled with high bandwidth of unmitigated fluctuations have resulted in highly oscillating and reduced amounts of effective produced syngas, which can be seen in Fig. 4b. For operation with MMPC on during the same time period, a stable and smooth operation for the ratio of oxygen to total coal around an optimum calculated set point is observed while continuously mitigating the effects of fluctuations (Fig. 3a). As it is seen in Fig. 3b, this can lead to lowered and tightly controlled amounts of $CH_4$ slip in syngas translating to hot gasifier operation and high conversions. Finally, the result of this optimal control and operation can be observed in Fig. 4b, where the amount of effective syngas production is kept at a constant and stable maximum of output while ensuring both operation safety and efficiency.

Furthermore, it was calculated that the developed MMPC solution delivers on average more than 1 % savings on oxygen input per unit effective syngas production ($Nm^3 O_2$ / $Nm^3$ effective syngas) as well as up to 3 % savings in total coal input per unit effective syngas production (kg coal / $Nm^3$ effective syngas). These savings present a significant opportunity for reduction of both direct and indirect $CO_2$ emissions related to the gasification process.

Embodiments of the invention are described with reference to different types of subject-matter. In particular, certain embodiments are described with reference to method claims while other embodiments are described with reference to apparatus claims. However, a person skilled in the art will infer from the description above and that which follows that, unless stated otherwise, in addition to any combination of features that belong to one type of claim, any combination between features in relation to different types of subject-matter or types of claim may also be considered. All features may be combined to achieve synergistic effects which go beyond simple summation of the technical features.

While the invention has been represented and described in detail in the drawings and the preceding description, such a representation and description shall be considered to be illustrative or exemplary and non-limiting. The invention is not limited to the disclosed embodiments. Other variations of the disclosed embodiments may be understood and executed by those skilled in the art of the field of the claimed invention from a study of the drawing, the disclosure and the dependent claims.

**List of reference numerals**

| | |
|---|---|
| 1 | coal feeding line |
| 2 | coal feeding line |
| 3 | coal feeding line |
| 4 | oxygen feeding line |
| 5 | steam feeding line |
| 6 | burner |
| 7 | gasification reactor |
| 8 | slag flow discharge |
| 9 | steam drum |
| 10 | steam line |

| | |
|---|---|
| 11 | synthesis gas line |
| 12 | data acquisition and recording system |
| 13 | multivariate model predictive controller (MMPV) |
| 14 | gasifier |
| 15 | cooling system |
| 16 | cooling water feeding line |
| FIC 1 | Coal Line 1 Flow Controller |
| FIC 2 | Coal Line 2 Flow Controller |
| FIC 3 | Coal Line 3 Flow Controller |
| FIC 4 | Oxygen Flow Controller |
| FIC 5 | Steam Flow Controller |
| FI 1 | Generated Steam Flow Indicator |
| PD 2 | Generated Steam Density Indicator |
| TI 1 | Gasifier Wall Temperature Indicator |
| PI 1 | Gasifier Pressure Indicator |
| DP 1 | Gasifier Pressure Difference Indicator |
| FI 2 | Output Syngas Flow Indicator |
| TI 2 | Output Syngas Temperature Indicator |
| PI 2 | Output Syngas Pressure Indicator |
| QI 1 | Analyzer for $CO_2$ Concentration in Output Syngas |
| QI 2 | Analyzer for $CH_4$ Concentration in Output Syngas |
| QI 3 | Analyzer for CO Concentration in Output Syngas |
| QI 4 | Analyzer for $H_2$ Concentration in Output Syngas |

**Claims**

1. Method to control a gasifier, the gasifier being configured for the conversion of a carbonaceous fuel to a combustible product gas, the method comprising

    (a) Determining a plurality of operating parameters of the gasifier and recording the determined operating parameters in a data acquisition and recording system;
    (b) Selecting at least one of the determined operating parameters of the gasifier as a controlled variable (CV), and at least one of the determined operating parameters of the gasifier as a manipulated variable (MV);
    (c) Transferring the data of the CV and of the MV to a multivariate model predictive controller (MMPC), the MMPC comprising an optimizer, a dynamic model and a controller;
    (d) Minimizing a deviation between a current value of the CV and a set point of the CV by calculating a sequence of predictions of the CV by means of the dynamic model, on the basis of a sequence of calculated values of the MV by means of the optimizer, in an iterative process within a set prediction time horizon and set control horizon, wherein in the iterative process, the optimizer provides the sequence of calculated values of the MV to the dynamic model, and the dynamic model provides the sequence of calculated values of the CV to the optimizer;
    (e) Identifying an optimized value of the MV as a result of said iterative process and applying the optimized value of the MV to the gasifier by means of the controller.

2. The method according to claim 1, wherein at least one of the determined operating parameters of the gasifier is selected as a disturbance variable (DV).

3. The method according to claim 1 or 2, wherein at least one of the determined operating parameters of the gasifier is selected as a process output variable (POV).

4. The method according to one of the preceding claims, wherein at least one of the determined operating parameters of the gasifier is selected as a calculated intermediate variable (IV), wherein the IV is calculated by combining at least two different variables, said variables being selected from the list comprising a controlled variable (CV), a manipulated variable (MV), a disturbance variable (DV) and a process output variable (POV).

5. The method according to one of the preceding claims, wherein the controlled variable (CV) is selected from at least one element of the list comprising

- effective combustible product gas production;
- methane ($CH_4$) concentration in the combustible product gas;
- carbon dioxide ($CO_2$) concentration in the combustible product gas;
- a gasifier wall temperature.

6. The method according to one of the preceding claims, wherein the manipulated variable (MV) is selected from at least one element of the list comprising

- mass flow of the carbonaceous fuel;
- volumetric flow of a gasification agent;
- volumetric flow of a moderator.

7. The method according to one of the claims 2 to 6, wherein the disturbance variable (DV) is selected from at least one element of the list comprising

- a pressure difference between a feeding tank comprising the carbonaceous fuel and the gasifier;
- a density of steam generated in a cooling system of a gasification reactor, wherein the gasification reactor forms part of the gasifier;
- a mass flow of steam generated in a cooling system of a gasification reactor, wherein the gasification reactor forms part of the gasifier.

8. The method according to one of claims 3 to 7, wherein the process output variable (POV) is selected from at least one element of the list comprising

- a volume fraction of carbon monoxide (CO) in the combustible product gas;
- a volume fraction of hydrogen ($H_2$) in the combustible product gas;
- a pressure of the combustible product gas;
- a temperature of the combustible product gas.

9. The method according to one of the claims 4 to 8, wherein the intermediate variable (IV) is selected from at least one element of the list comprising

- a ratio of a the mass of a gasifying agent and the mass of the carbonaceous fuel;
- a ratio of a mass of a gasifying agent and the mass of a moderator;
- a first mass flow of the carbonaceous fuel and a second mass flow of the carbonaceous fuel;

10. The method according to one of the preceding claims, wherein the dynamic model uses at least one element selected from the list of a MV, DV, IV and POV as an input parameter, to predict a value of a CV as an output parameter for the control process.

11. The method according to one of the preceding claims, wherein in an identification phase of the dynamic model, a single MV is modelled against a related CV and/or IV.

12. The method according to one of the preceding claims, wherein in an identification phase of the dynamic model, a DV, POV or IV is separately modelled against its relevant CV.

13. The method according to claim 11 or 12, wherein the dynamic model is identified by a closed loop system identification, an open loop system identification or a combination thereof.

14. The method according to one of the preceding claims, wherein the MMPC uses an optimization algorithm according to

$$f = \sum_{i=1}^{n_y} \left\| w_y \left( S_i - Y_{Estimated,i} \right) \right\|_2^2 + \sum_{i=1}^{n_u} \left\| w_u \left( \Delta U_i \right) \right\|_2^2$$

$$\min_{\Delta U} f \ \ by \ satisfying \ constraint$$

wherein

$S_i$ is the set point of the CV to be achieved,
$Y_{Estimated,i}$ is the CV predicted by the dynamic model,
$\Delta U_i$ is the change to be applied on a MV,
$w_y$ and $w_u$ are regulating parameters which affect the aggressiveness and robustness of the optimization,
$n_y$ is the prediction horizon and
$n_u$ is the control horizon.

15. A control unit for a gasifier, configured to execute the method according to one of the preceding claims.

16. A gasifier, comprising the control unit according to claim 15.

17. The gasifier according to claim 16, wherein in the gasifier is configured for the conversion of a carbonaceous fuel to a combustible product gas.

18. The gasifier of claim 16, wherein the carbonaceous fuel is a solid fuel, in particular coal, and the combustible product gas is synthesis gas.

Fig. 1

EP 3 910 428 A1

**Fig. 2a**

**Fig. 2b**

**Fig. 3a**

**Fig. 3b**

**Fig. 4a**

MMPC Simulation

DCS Real Data

**Fig. 4b**

Europäisches
Patentamt

European
Patent Office

Office européen
des brevets

# EUROPEAN SEARCH REPORT

Application Number

EP 20 02 0223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/222108 A1 (LOU XINSHENG [US] ET AL) 3 September 2009 (2009-09-03)<br>* paragraph [0004] - paragraph [0005] *<br>* paragraph [0032] - paragraph [0035] *<br>----- | 1-18 | INV.<br>G05B13/04 |
| Y | GB 2 423 831 A (FISHER ROSEMOUNT SYSTEMS INC [US]) 6 September 2006 (2006-09-06)<br>* paragraph [0041] *<br>* paragraph [0090] *<br>----- | 1-18 | |
| A | ADEODU OLUWASANMI ET AL: "On the theory of economic MPC: ELOC and approximate infinite horizon EMPC",<br>JOURNAL OF PROCESS CONTROL,<br>vol. 73, 30 November 2018 (2018-11-30), pages 19-32, XP085605206,<br>30-11-2018<br>ISSN: 0959-1524, DOI:<br>10.1016/J.JPROCONT.2018.09.013<br>* abstract *<br>----- | 1 | |
| | | | **TECHNICAL FIELDS SEARCHED (IPC)**<br><br>G05B |

The present search report has been drawn up for all claims

| Place of search | Date of completion of the search | Examiner |
|---|---|---|
| The Hague | 1 October 2020 | Kelperis, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

**EP 3 910 428 A1**

## ANNEX TO THE EUROPEAN SEARCH REPORT
## ON EUROPEAN PATENT APPLICATION NO.

EP 20 02 0223

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2020

| Patent document cited in search report | Publication date | Patent family member(s) | Publication date |
|---|---|---|---|
| US 2009222108 A1 | 03-09-2009 | AU 2009222060 A1 | 11-09-2009 |
| | | AU 2009222061 A1 | 11-09-2009 |
| | | AU 2009223437 A1 | 17-09-2009 |
| | | CA 2715983 A1 | 17-09-2009 |
| | | CA 2716653 A1 | 11-09-2009 |
| | | CA 2735188 A1 | 11-09-2010 |
| | | CN 101960397 A | 26-01-2011 |
| | | CN 101965544 A | 02-02-2011 |
| | | CN 102084303 A | 01-06-2011 |
| | | EP 2263127 A1 | 22-12-2010 |
| | | EP 2263128 A2 | 22-12-2010 |
| | | EP 2263129 A1 | 22-12-2010 |
| | | JP 5473950 B2 | 16-04-2014 |
| | | JP 5882582 B2 | 09-03-2016 |
| | | JP 2011513861 A | 28-04-2011 |
| | | JP 2011513862 A | 28-04-2011 |
| | | JP 2011514601 A | 06-05-2011 |
| | | US 2009222108 A1 | 03-09-2009 |
| | | US 2009222110 A1 | 03-09-2009 |
| | | US 2009222136 A1 | 03-09-2009 |
| | | WO 2009111379 A1 | 11-09-2009 |
| | | WO 2009111380 A1 | 11-09-2009 |
| | | WO 2009114309 A2 | 17-09-2009 |
| GB 2423831 A | 06-09-2006 | CN 1497402 A | 19-05-2004 |
| | | DE 10341762 A1 | 15-04-2004 |
| | | GB 2394564 A | 28-04-2004 |
| | | GB 2423831 A | 06-09-2006 |
| | | HK 1060777 A1 | 04-04-2007 |
| | | JP 4079369 B2 | 23-04-2008 |
| | | JP 2004265381 A | 24-09-2004 |

EPO FORM P0459

For more details about this annex : see Official Journal of the European Patent Office, No. 12/82

**EP 3 910 428 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108342225
- CN 102520736
- CN 105062569
- CN 209674253
- CN 105955020